# EUROPEAN PATENT SPECIFICATION

(11) **EP 3 240 741 B1**
(45) Date of publication and mention of the grant of the patent: **09.02.2022**
(21) Application number: 15876140.3
(22) Date of filing: 29.12.2015
(51) Int. Cl.: B65G 1/04, B65G 1/06, B25J 11/00, B25J 5/00, B25J 19/00, F16H 19/04, G06K 7/10, G06K 7/14, G06K 19/06, G06K 19/07

(54) **ROBOTIC STORAGE AND RETRIEVAL SYSTEM**
ROBOTISCHES AUFBEWAHRUNGS- UND AUFFINDUNGSSYSTEM
SYSTÈME DE STOCKAGE ET DE RÉCUPÉRATION ROBOTIQUE

(30) Priority: 29.12.2014 US 201462097407 P
(43) Date of publication of application: 08.11.2017
(73) Proprietor: Robert Bosch GmbH, 70442 Stuttgart (DE)
(72) Inventor: ROAN, Philip, San Mateo, CA 94402 (US); OSENTOSKI, Sarah, Sunnyvale, CA 94086 (US); KROEGER, Martin, 70199 Suttgart (DE); BHAT, Shilpa, Sunnyvale, CA 94086 (US); BOSATELLI, Simone, 70176 Stuttgart (DE)
(86) International application number: PCT/US2015/067812
(87) International publication number: WO 2016/109498

(56) References cited:
- WO-A1-2011/116458
- US-A1- 2002 027 742
- US-A1- 2002 177 924
- US-A1- 2012 027 546
- US-A1- 2012 029 687
- US-A1- 2014 308 098
- US-B1- 7 381 022

## Description

### Priority Claim

This application claims priority to co-pending U.S. Provisional Application No. 62/097,407, filed on December 29, 2014.

### Background

The present disclosure relates to robotic systems and devices, and particularly to systems for storing and retrieving items. In particular, the present invention relates to a robotic storage and retrieval system according to the preamble of claim 1 and to a method for robotic storage and retrieval of a container to and from a shelving unit according to the preamble of claim 13. Such a robotic storage and retrieval system and such a robotic storage and retrieval method are known from the document US 2012/0027546 A1. A retriever with a cavity for receiving a container is known from US 7 381 022 B1.

Storing and organizing items is a daunting task for many people. Homeowners or renters inevitably collect "stuff and equally inevitably store that stuff in a haphazard manner that is neither efficient nor conducive to ready retrieval. Even with storage shelves many homeowners or renters may start out organized but the law of entropy prevails as the shelved items become increasingly disorganized over time. Studies have shown that as many as half the homeowners have to park at least one car outside their house because of all the "stuff taking up garage space. Other surveys have shown that the majority of homeowners want to get organized but do not know how to become and stay organized. The problem of organizing items is not limited to the residential arena, but infects small businesses as well.

Consequently, there is a need for a system that helps a person organize, store and retrieve items with ease.

### Summary

A robotic storage and retrieval system comprises a shelving unit including at least one vertical column of a plurality of vertically arranged storage locations, each storage location sized to receive a container, a unique identifier associated with each of the plurality of storage locations, and a pair of vertical rails associated with each of the at least one vertical column.

The system further comprises a robotic retriever defining a cavity sized to receive the container. The robotic retriever includes a drive mechanism for propelling the retriever to a position adjacent a lowermost one of the storage locations of the shelving unit, a recognition unit configured to recognize the unique identifier of each of the plurality of storage locations, and a traction drive mechanism adapted to engage the pair of vertical rails to propel the retriever vertically along the at least one vertical column.

The robotic retriever includes a retriever apparatus operable to engage a container to move the container between a storage location and the cavity of the robotic retriever, and a processor operable to execute instructions to control the drive mechanism and traction drive mechanism to drive the retriever to a storage location according to the unique identifier as recognized by the recognition unit, and to operate the retriever apparatus to move a container between the storage location and the cavity of the robotic retriever.

The robotic storage system according to the invention is defined in claim 1 whereas the method for robotic storage and retrieval of a container, according to the invention, is defined in claim 13.

### Description of the Figures

**FIG. 1** is a perspective view of a robotic retriever disclosed herein.
**FIG. 2** is a front view of the robotic retriever shown in **FIG. 1****.**
**FIG. 3** is a perspective view of a shelving unit for use with the robotic retriever shown in **FIGS. 1-2**.
**FIG. 4** is a perspective view of a hand-held controller for the robotic retriever shown in **FIGS. 1-2****.**
**FIG. 5** is a top view of the robotic retriever of **FIGS. 1-2** engaged to the shelving unit of **FIG. 3**.
**FIG. 6** is a series of diagrams showing the steps in retrieving a container from the shelving unit using the robotic retriever disclosed herein.
**FIG. 7** is a depiction of screen shots from a smart-phone app for accessing and controlling the storage and retrieval system disclosed herein.

### Detailed Description

For the purposes of promoting an understanding of the principles of the disclosure, reference will now be made to the embodiments illustrated in the drawings and described in the following written specification. It is understood that no limitation to the scope of the disclosure is thereby intended. It is further understood that the present disclosure includes any alterations and modifications to the illustrated embodiments and includes further applications of the principles disclosed herein as would normally occur to one skilled in the art to which this disclosure pertains.

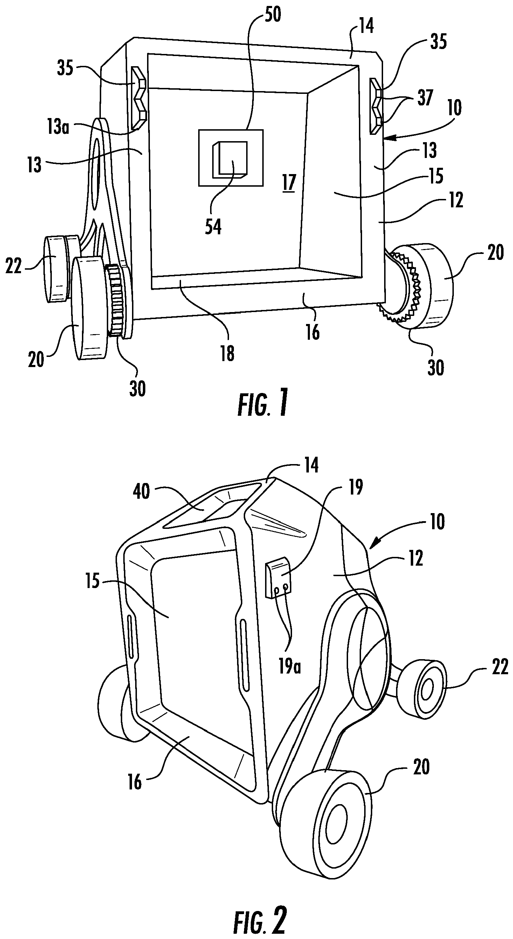

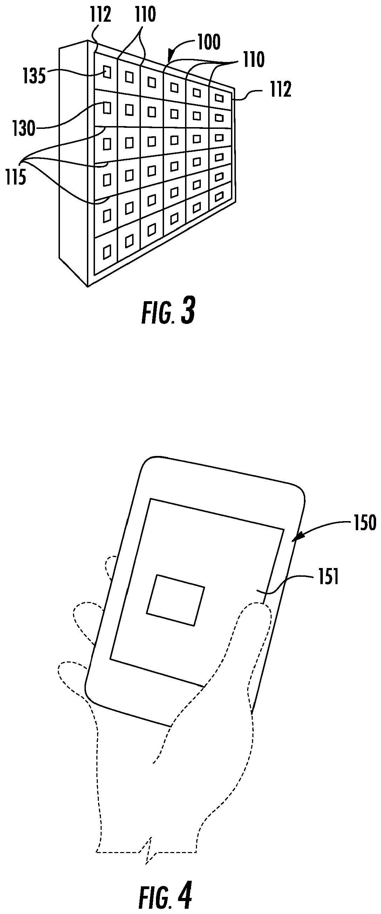

The present disclosure contemplates a robotic system that automatically stores and retrieves containers from a shelving unit. The robotic system includes a robotic retriever **10** shown in **FIG. 1** that has a body **12** with a pair of drive wheels **20** and a pair of steerable wheels **22**. The retriever **10** includes a drive motor (not shown) operable to rotate the drive wheels and a steering mechanism (not shown) operable to pivot the steerable wheels **22**. The drive motor and steering mechanism can be of known configurations particularly useful for propelling robotic devices. The body **12** may house a power supply (not shown), such as a rechargeable battery, as well as control electronics for the drive motor and steering mechanism. The control electronics may incorporate a processor capable of executing control instructions of a software program stored in a memory associated with the processor or in a remote central memory. The control electronics may further include wireless capabilities, with at least wireless receiving capabilities for receiving instructions from a remote controller, such as the hand-held controller **150** depicted in **FIG. 4**. The control electronics, processor and software program may be of known configuration and functionality that is particularly useful for controlling the movement of robotic devices. The power supply, electronics and processor may be embedded within the body **12** or contained within a housing mounted to the body **12** in a conventional manner, such as the self-contained power and electronics component **19** shown in **FIG. 2****.** The electronics and processor may incorporate input and output elements **19a**, such as for connecting the power supply to an external power outlet, or such as a conventional USB port for interfacing with an external device or with a USB memory device. The component **19** may also incorporate wireless technology to permit wireless communication with an external device, such as a phone or computer.

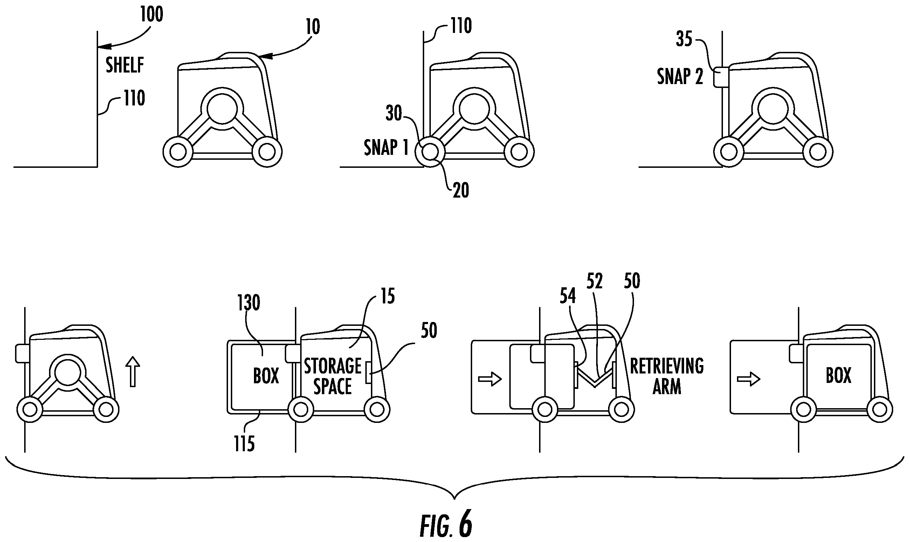

The body **12** of the robotic retriever **10** includes opposite side walls **13**, a top wall **14**, a front wall **16**, a back wall **17** and a bottom wall **18** that together define a cavity **15** (**FIG. 1**) that is sized to contain a payload, such as a container **130** (**FIGS. 3**, **6**) to be stored in a shelving unit **100** as illustrated in **FIG. 3**. The size of the body and cavity are based on the size of the payload being stored and retrieved. For instance, the payload may be a container **130** that is the size of a standard banker's box or of a standard four-drawer cabinet. The robotic retriever **10** and particularly the drive system are configured to meet the weight and size demands of the payload. In one embodiment, the robotic retriever is configured to carry a payload of up to 20 kg (45 lbs).

In one aspect, the robotic retriever may incorporate a recognition component **40** in the top wall **14** of the body **12**, as shown in **FIG. 2**. The recognition component **40** is adapted to recognize an identifier **135** associated with a container **130 (****FIG. 3****)** being retrieved. For instance, the identifier **135** may be a bar code or similar coded identifier, in which case the recognition component **40** is a bar code reader. Alternatively, the identifier may be an RF tag with a unique identification that can be read by a known RF reader, in which case the recognition component **40** is an RF reader. As a further option, the recognition component **40** may be a camera with associated image recognition software capable of comparing the captured image with a data base of stored images. The recognition component **40** is thus operable to generate information fed to an on-board processor, such as the processor in the component **19**, or to remote processor to determine the identity of the container in a known manner.

The robotic retriever **10** is configured to store and retrieve containers from a shelving unit **100** as shown in **FIG. 3**. The shelving unit includes at least one column of vertically arranged storage locations, and in particular an array of vertical rails **110, 112** and storage locations in the form of horizontal shelves **115** sized according to the size of container **130** being stored and according to the available space for the shelving unit. The present disclosure contemplates a shelving unit capable of storing containers from floor to ceiling to make optimum use of the available space. Thus, for a typical dwelling the shelving unit can be about eight feet tall, with the width and number of vertical columns of containers determined by the available space along a wall. In the embodiment illustrated in **FIG. 3**, the shelving unit **100** includes six columns of six rows of shelves sized to support container dimensions of 30 - 35 cm by 30 - 35 cm (12 - 14 inches by 12 - 14 inches).

Each container within the shelving unit includes a unique identifier **135** as described above. Alternatively, each individual storage space may include the unique identifier rather than the container, or each identifier **135** may include data pertaining to both the container and the storage space. The object of the unique identifier is to provide means for locating a particular container or payload in the shelving unit **100**. Whether the identification **135** is associated with the container or with the location in the shelving unit, or both, determines how the container is located and retrieved as well as how the location of the container is documented. Software within the processor in component **19** is adapted to the particular identification approach adopted for the shelving unit **100**.

As shown in **FIG. 3****,** the containers are stored vertically and horizontally within the shelving unit. The robotic retriever **10** is configured to travel to any shelf within the unit **100** to store or retrieve a container **130**. The robotic retriever **10** is wheeled to allow the retriever to be maneuvered to a location in front of the vertical column of the desired location. Moreover, the retriever **10** includes traction wheels **30** adjacent the drive wheels **20 (****FIG. 1****)** that can be driven by the same drive mechanism as the drive wheels. The traction wheels and drive wheels share a common axle.

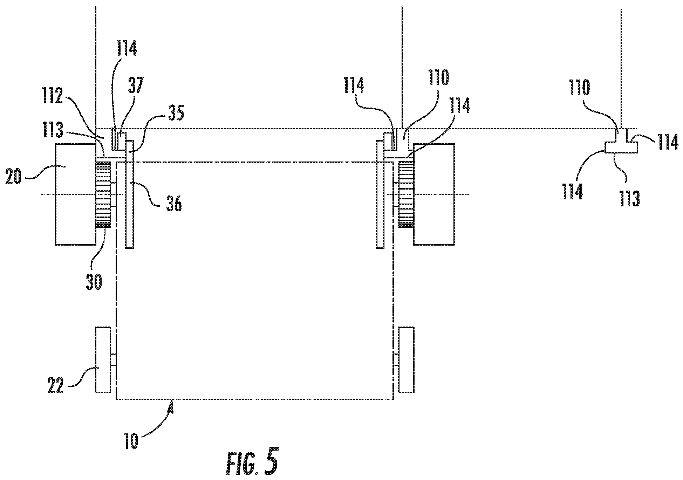

Each traction wheel is configured to engage a vertical rail **110**, **112**, and particularly a traction surface **113** of the rail, as depicted in **FIG. 5**. In one embodiment the traction wheels **30** and traction surface **113** can incorporate splines, in the form of a rack and pinion gear arrangement. The traction wheel and surface are configured so that rotation of the traction wheel propels the robotic retriever along the rail. Other traction configurations are contemplated, such as a high friction surface on either or both of the traction wheel and traction surface.

The robotic retriever **10** is supported on the shelving unit **100** with the front wall **16** of the retriever body **12** against the shelving unit and the cavity **15** facing the unit. The retriever thus includes a gripper apparatus **35** that is configured to grip the vertical side rails **110, 112** to help hold the front wall **16** of the retriever against the shelving unit. The drive wheels **20** may also help hold the retriever against the side rails, as illustrated in **FIG. 5**. The side rails are configured to cooperate with the gripper apparatus **35** to hold the robotic retriever against the rails as the retriever travels vertically upward. Thus, the side rails **110** may be in the form of a T-shaped body defining an interior ledge **114** against which rollers **37** of the gripper apparatus may bear. The side rail **112** at the side of the shelving unit **100** does not require a T-shape but can instead be an L-shape to still define an interior ledge for the rollers **37**. The rollers **37** are mounted on the end of an extendable arm **36** that is housed within a channel **13a** in the side wall **13** of the retriever body **12**. The extendable arms **36** are provided with an extension mechanism such as a motor and rack/pinion arrangement between the motor and the top or bottom edge of the arm. Other mechanisms may be provided for selectively extending the arms **36** when it is desired for the robotic retriever to climb the side rails of the shelving unit. The extendable arms **36** may be configured to navigate past the ledge **114** of the side rail so that the rollers **37** may engage the inside of the ledge, as shown in **FIG. 5**. It can be appreciated that other forms of gripper apparatus may be provided that are capable of engaging the side rails to prevent the retriever **10** from falling from the shelving unit as the retriever is propelled upward by the traction wheels **30**. The gripper apparatus may be configured to use magnetic attraction to keep the retriever in proper position against the shelving unit.

A sequence of operation of the robotic retriever according to one aspect of the present disclosure is depicted in **FIG. 6**. In the first step, the retriever **10** travels to the shelving unit **100** and moves into alignment with the side rails of a desired column of shelves. In this first step, the retriever may rely on the recognition component **40** to determine the proper column based on the desired shelf location. This desired location may be a next available empty shelf for storing a container **130** or may be the shelf containing a particular desired container. The recognition component and associated software may be configured to follow a particular protocol for locating the desired shelf position. Alternatively, the robotic retriever may not rely on a recognition component but may instead execute software capable of recognizing location by movements alone. In this alternative, the software operates from a stored "map" of locations and determines the necessary movements, including distance and direction of travel both along the floor and along the side rails, from a current location to a desired location. As a further option, the software may permit manually guidance of the retriever 10 by the user.

Once the robotic retriever **10** is properly aligned with a desired column of shelves in the unit, the retriever is propelled forward until the front wall **16** is adjacent to or abuts the shelving unit. The gripper apparatus **35** is actuated in the third step to firmly engage the vertical rails **110, 112** and in the next step the traction wheels are actuated to drive the retriever up the rails. When the robotic retriever has climbed to the shelf supporting the desired container **130** the cavity **15** is aligned to receive the container. The robotic retriever includes a retriever apparatus **50** mounted at the back wall **17** of the retriever **(****FIG. 1****)** that is adapted to engage the container **130**. The retriever apparatus **50** includes an extension mechanism **52** and a grabber **54** that is configured to engage the container. The container **130** and grabber **54** are mutually configured to achieve solid engagement of the container by the retriever apparatus to be able to pull the container back into the cavity **15** of the robotic retriever **10**. The engagement mechanism may be a latch/receiver arrangement or a magnetic component. Since the retriever apparatus **50** only needs to slide the container along the shelf and cavity the engagement mechanism can be simplified. Once the grabber **54** engages the container, the extension mechanism **52** reverses to pull the container back into the cavity **15**. It can be understood that the retriever apparatus is operable to push a container from the cavity into a shelf location by extending the extension mechanism **52** when a container is within the cavity.

Once the container is safely within the cavity for retrieval or within the shelving unit for storage, the traction wheels are reversed to drive the robotic retriever down the side rails until the wheels **20**, **22** contact the floor. Sensors may be incorporated into the robotic retriever to determine whether the retriever is back on the floor. Sensors may also be incorporated within the cavity to verify that the container is properly positioned within either the cavity **15** (for retrieval) or within the shelving unit **100** (for storage) before the retriever is activated. Once the robotic retriever is on the floor, the control system may direct the retriever to a desired location away from the shelving unit where the user can remove the container that has been retrieved. If the retriever is operating in a storage mode, the retriever may be directed to an idle location, which may include a docking station where an on-board battery may be recharged and the retriever may be stored.

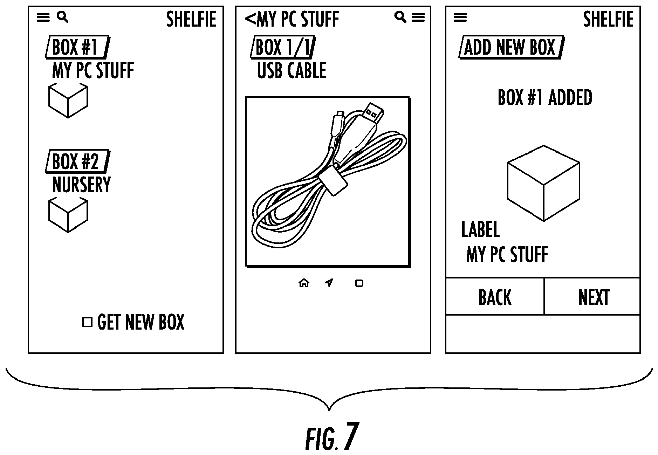

The robotic retriever may be part of a complete storage and retrieval system that integrates with a user-operated controller. For instance, a hand-held controller **150 (****FIG. 4****)** may be provided that provides a user interface to direct the operation of the robotic retriever. For instance, the hand-held controller may include a key pad or touch screen **151** for entering instructions and information. The hand-held controller may thus allow the user to identify a specific shelf for storing or retrieving a container, or may allow the user to enter a particular identification number for a container to be retrieved. It is appreciated that the hand-held controller may be a smart phone and the instructions may implemented using an app. Screen shots for an exemplary app for use with a smart-phone are shown in **FIG. 7**. In lieu or in addition to the hand-held controller, a PC-based software program may be provided for controlling the robotic retriever.

It is contemplated that the control and operation of the robotic retriever may rely on a data base to store information regarding shelf location and container identification. The data base may also be permitted to store user comments associated with a particular container, such as an inventory of contents. The software associated with storage and retrieval system may incorporate a searchable data base that allows the user to search based on contents of the containers so that the user does not need to know where a particular item is stored. For example, the user desiring to retrieve a photo album from storage may enter commands to search the data base the container holding a photo album. The system extracts the container identification and/or its shelf location and directs the robotic retriever to execute a retrieval operation as described above. The data base for the storage and retrieval system may retain historical records regarding each container and/or its contents.

## Claims

1. A robotic storage and retrieval system comprising:
a shelving unit (100) including;
at least one vertical column of a plurality of vertically arranged storage locations, each storage location sized to receive a container (130);
a pair of vertical rails (110, 112) associated with each of the at least one vertical column; and
a robotic retriever (10) including;
a drive mechanism including drive wheels (20) for propelling the retriever (10) to a position adjacent a lowermost one of the storage locations of the shelving unit (100);
a recognition unit configured to recognize the unique identifier (135) of each of the plurality of storage locations;
a traction drive mechanism adapted to engage the pair of vertical rails (110, 112) to propel the retriever (10) vertically along the at least one vertical column;
a retriever apparatus (50) operable to engage a container (130) to move the container (130) between a storage location and the cavity (15) of the robotic retriever (10); and
a processor operable to execute instructions to control the drive mechanism and traction drive mechanism to drive the retriever (10) to a storage location according to the unique identifier (135) as recognized by the recognition unit, and to operate the retriever apparatus (50) to move a container (130) between the storage location and the cavity of the robotic retriever (10),
**characterised in that**
the shelving unit (100) includes a unique identifier (135) associated with each of the plurality of storage locations;
the robotic retriever (10) defines a cavity (15) sized to receive the container (130); and
the retriever (10) includes traction wheels (30) adjacent to the drive wheels (20) that can be driven by the same drive mechanism as the drive wheels and **in that** the traction wheels (30) and drive wheels (20) share a common axle.

2. The robotic storage and retrieval system of claim 1, wherein the pair of vertical rails (110, 112) and the traction drive mechanism include a rack and pinion arrangement, with the traction drive mechanism including a pair of traction wheels (30) in the form of a pinion gear and the pair of vertical rails (110, 112) are configured in the form of a rack gear.

3. The robotic storage and retrieval system of claim 1, further comprising a gripper apparatus (35) between the shelving unit (100) and the robotic retriever (10) operable to maintain the retriever (10) in engagement with the pair of side rails (110, 112) as the retriever is propelled vertically along the side rails (110, 112).

4. The robotic storage and retrieval system of claim 3, wherein the gripper apparatus (35) includes a pair of arms (36) extendable from the robotic retriever (10), each arm (36) including a roller (37) adapted to engage a corresponding one of the side rails (110, 112) of the shelving unit (100).

5. The robotic storage and retrieval system of claim 1, wherein:
the unique identifier (135) is one of a bar code, an RFID and a unique image; and
the recognition unit is a corresponding one of a bar code reader, an RFID reader and a camera with associated image recognition software.

6. The robotic storage and retrieval system of claim 1, wherein the drive mechanism includes a plurality of ground-engaging wheels operable to steer the robotic retriever (10) between the shelving unit (100) and a separate idle location.

7. The robotic storage and retrieval system of claim 1, wherein the robotic retriever (10) includes an on-board power supply for providing power to the drive mechanism, the recognition unit, the traction drive mechanism and the retriever apparatus (50).

8. The robotic storage and retrieval system of claim 1, wherein the retriever apparatus (50) includes an extension mechanism (52) mounted to a back wall (17) of the robotic retriever (10) within the cavity (15) and a grabber (54) at an extendable end of the extension mechanism (52), the grabber (54) configured to engage a container (130).

9. The robotic storage and retrieval system of claim 8, wherein the grabber (54) includes one of a magnetic component and a latch component configured to engage a corresponding receiver on the container (130).

10. The robotic storage and retrieval system of claim 1, wherein the shelving unit (100) includes a plurality of vertical columns of a plurality of vertically arranged storage locations.

11. The robotic storage and retrieval system of claim 1, wherein the processor includes a wireless communication component and is operable for wireless communication with a remote device.

12. The robotic storage and retrieval system of claim 11, wherein the remote device is a smart phone.

13. A method for robotic storage and retrieval of a container (130) to and from a shelving unit (100) having a plurality of vertical columns of a plurality of vertically arranged storage locations; the method comprising:
identifying a desired storage location;
directing a robotic retriever (10) to a corresponding vertical column in which the desire storage location resides; wherein the retriever (10) is propelled by a drive mechanism including drive wheels (20);
engaging the robotic retriever (10) to a pair of vertical rails (110, 112) at the corresponding vertical column;
propelling the robotic retriever (10) vertically along the pair of vertical rails (110, 112) until the robotic retriever (10) is disposed at the desired storage location; and
with a retriever apparatus of the robotic retriever (10) conveying the container (130) between the robotic retriever (10) and the desired storage location **characterised in that**
the shelving unit (100) includes a unique identifier (135) associated with each of the plurality of storage locations;
the container is received in a cavity (15) defined by the robotic retriever (10); and
the retriever (10) includes traction wheels (30) adjacent to the drive wheels (20) that can be driven by the same drive mechanism as the drive wheels, the traction wheels (30) and the drive wheels (20) sharing a common axle.

14. The method for robotic storage and retrieval of a container of claim 13, wherein the robotic retriever (10) is directed to conduct the storage and retrieval function by user using a smart phone.

## Patentansprüche

1. Robotergestütztes Lagerungs- und Holsystem, umfassend:
eine Regaleinheit (100) mit:
mindestens einer vertikalen Säule einer Vielzahl vertikal angeordneter Lagerorte, wobei jeder Lagerort so bemessen ist, dass er einen Behälter (130) aufnehmen kann;
einem Paar vertikaler Schienen (110, 112), das mit jeder der mindestens einen vertikalen Säule verbunden ist; und
einer Roboter-Holeinheit (10) mit
einem Antriebsmechanismus mit Antriebsrädern (20), um die Roboter-Holeinheit (10) an eine Position benachbart zu einem untersten der Lagerorte der Regaleinheit (100) zu bewegen;
einer Erkennungseinheit, die dazu bestimmt ist, die eindeutige Kennung (135) jedes der Vielzahl der Lagerorte zu erkennen;
einem Traktionsantriebsmechanismus, der in das Paar vertikaler Schienen (110, 112) eingreifen kann, um die Holeinheit (10) vertikal entlang der mindestens einen vertikalen Säule zu bewegen;
einer Holvorrichtung (50), die in einen Behälter (130) eingreifen kann, um den Behälter (130) zwischen einem Lagerort und dem Hohlraum (15) der Roboter-Holeinheit (10) zu bewegen; und
einem Prozessor, der dazu bestimmt ist, Anweisungen zur Steuerung des Antriebsmechanismus und des Traktionsantriebsmechanismus auszuführen, um die Holeinheit (10) an einen Lagerort entsprechend der eindeutigen Kennung (135) zu bewegen, welche die Erkennungseinheit erkannt hat, und um die Holvorrichtung (50) zu betätigen, so dass ein Behälter (130) zwischen dem Lagerort und dem Hohlraum der Roboter-Holeinheit (10) bewegt wird,
**dadurch gekennzeichnet, dass**
die Regaleinheit (100) eine eindeutige Kennung (135) umfasst, die jeder der Vielzahl von Lagerorten zugeordnet ist;
die Roboter-Holeinheit (10) einen Hohlraum (15) umgrenzt, der zur Aufnahme des Behälters (130) bemessen ist; und
die Roboter-Holeinheit (10) Traktionsräder (30) umfasst, die benachbart zu den Antriebsrädern (20) angeordnet sind und die durch denselben Antriebsmechanismus angetrieben werden können wie die Antriebsräder, und dadurch dass die Traktionsräder (30) und die Antriebsräder (20) eine gemeinsame Achse teilen.

2. Robotergestütztes Lagerungs- und Holsystem nach Anspruch 1, wobei das Paar vertikaler Schienen (110, 112) und der Traktionsantriebsmechanismus eine Zahnstangen-Ritzel-Anordnung umfassen, wobei der Traktionsantriebsmechanismus ein Paar Traktionsräder (30) in Form eines Ritzeltriebs umfasst und das Paar vertikaler Schienen (110, 112) in Form eines Zahnstangentriebs ausgebildet ist.

3. Robotergestütztes Lagerungs- und Holsystem nach Anspruch 1, zudem umfassend eine Greifvorrichtung (35) zwischen der Regaleinheit (100) und der Roboter-Holeinheit (10), welche dazu dient, die Holeinheit (10) in Eingriff mit dem Paar Seitenschienen (110, 112) zu halten, während die Holeinheit vertikal entlang der Seitenschienen (110, 112) bewegt wird.

4. Robotergestütztes Lagerungs- und Holsystem nach Anspruch 3, wobei die Greifvorrichtung (35) ein Paar Arme (36) umfasst, die von der Roboter-Holeinheit (10) ausfahrbar sind, wobei jeder Arm (36) eine Rolle umfasst (37), die in eine entsprechende der Seitenschienen (110, 112) der Regaleinheit (100) eingreifen kann.

5. Robotergestütztes Lagerungs- und Holsystem nach Anspruch 1, wobei:
die eindeutige Kennung (135) ein Barcode, eine RFID oder ein eindeutiges Bild ist; und
die Erkennungseinheit ein entsprechender Barcodeleser, ein RFID-Leser oder eine Kamera mit einer zugehörigen Bilderkennungssoftware ist.

6. Robotergestütztes Lagerungs- und Holsystem nach Anspruch 1, wobei der Antriebsmechanismus eine Vielzahl von bodenberührenden Rädern umfasst, die dazu dienen, die Roboter-Holeinheit (10) zwischen der Regaleinheit (100) und einer separaten Ruheposition zu steuern.

7. Robotergestütztes Lagerungs- und Holsystem nach Anspruch 1, wobei die Roboter-Holeinheit (10) eine integrierte Stromversorgung umfasst, die den Antriebsmechanismus, die Erkennungseinheit, den Traktionsantriebsmechanismus und die Holvorrichtung (50) mit Strom versorgt.

8. Robotergestütztes Lagerungs- und Holsystem nach Anspruch 1, wobei die Holvorrichtung (50) einen Ausfahrmechanismus (52) umfasst, der an einer Rückwand (17) der Roboter-Holeinheit (10) innerhalb des Hohlraums (15) befestigt ist, und einen Greifer (54) an einem ausfahrbaren Ende des Ausfahrmechanismus (52), wobei der Greifer (54) dazu bestimmt ist, einen Behälter (130) zu greifen.

9. Robotergestütztes Lagerungs- und Holsystem nach Anspruch 8, wobei der Greifer (54) ein magnetisches Element oder ein Einrastelement umfasst, das dazu bestimmt ist, in eine entsprechende Aufnahmevorrichtung des Behälters (130) einzurasten.

10. Robotergestütztes Lagerungs- und Holsystem nach Anspruch 1, wobei die Regaleinheit (100) eine Vielzahl vertikaler Säulen einer Vielzahl vertikal angeordneter Lagerorte umfasst.

11. Robotergestütztes Lagerungs- und Holsystem nach Anspruch 1, wobei der Prozessor eine Drahtloskommunikationskomponente umfasst und für die Drahtloskommunikation mit einem externen Gerät ausgelegt ist.

12. Robotergestütztes Lagerungs- und Holsystem nach Anspruch 11, wobei das externe Gerät ein Smartphone ist.

13. Verfahren zur robotergestützten Lagerung in und zum Holen eines Behälters (130) aus einer Regaleinheit (130) mit einer Vielzahl vertikaler Säulen einer Vielzahl vertikal angeordneter Lagerorte, wobei das Verfahren Folgendes umfasst:
Identifizieren eines gewünschten Lagerortes;
Lenken einer Roboter-Holeinheit (10) zu einer entsprechenden vertikalen Säule, in der sich der gewünschte Lagerort befindet; wobei die Holeinheit (10) durch einen Antriebsmechanismus mit Antriebsrädern (20) angetrieben wird;
Eingreifen der Roboter-Holeinheit (10) in ein Paar vertikaler Schienen (110, 112) an der entsprechenden vertikalen Säule;
Bewegen der Roboter-Holeinheit (10) vertikal entlang dem Paar vertikaler Schienen (110, 112), bis sich die Roboter-Holeinheit (10) an dem gewünschten Lagerort befindet; und
Befördern des Behälters (130) mithilfe einer Holvorrichtung der Roboter-Holeinheit (10) zwischen der Roboter-Holeinheit (10) und dem gewünschten Lagerort, **dadurch gekennzeichnet, dass**
die Regaleinheit (100) eine eindeutige Kennung (135) umfasst, die jeder der Vielzahl von Lagerorten zugeordnet ist;
der Behälter in einem Hohlraum (15) aufgenommen wird, der von der Roboter-Holeinheit (10) umgrenzt wird;
und dadurch dass
die Holeinheit (10) Traktionsräder (30) umfasst, die benachbart zu den Antriebsrädern (20) angeordnet sind und die durch denselben Antriebsmechanismus angetrieben werden können wie die Antriebsräder, wobei die Traktionsräder (30) und die Antriebsräder (20) eine gemeinsame Achse teilen.

14. Verfahren zur robotergestützten Lagerung und zum Holen eines Behälters nach Anspruch 13, wobei die Roboter-Holeinheit (10) die Lagerungs- und Holfunktion ausführt, indem ein Anwender ein Smartphone bedient.

## Revendications

1. Système robotique de stockage et de récupération comprenant:
une unité d'étagères (100) ayant:
au moins une colonne verticale d'un ensemble d'emplacements de stockage disposés verticalement, chaque emplacement de stockage étant dimensionné pour recevoir un conteneur (130),
une paire de rails verticaux (110, 112) associés à chacune des colonnes verticales, et
un dispositif robotique de récupération (10) comprenant:
un mécanisme d'entraînement avec des roues motrices (20) pour propulser le dispositif de récupération (10) dans une position adjacente à l'emplacement le plus bas des emplacements de stockage de l'unité d'étagères (100),
une unité de reconnaissance configurée pour reconnaître l'unique identifiant (135) de chaque emplacement de l'ensemble des emplacements de stockage,
un mécanisme d'entraînement en traction pour coopérer avec la paire de rails verticaux (110, 112) et propulser le dispositif de récupération (10) verticalement le long d'au moins une colonne verticale,
un appareil de récupération (50) pour coopérer avec le conteneur (130) et déplacer le conteneur (130) entre une position de stockage et la cavité (15) du dispositif robotique de récupération (10), et
un processeur fonctionnant de manière à exécuter les instructions pour commander le mécanisme d'entraînement et le mécanisme d'entraînement en traction pour entraîner le dispositif récupérateur (10) à l'emplacement de stockage correspondant à l'identifiant unique (135) qui a été reconnu par l'unité de reconnaissance et faire fonctionner l'appareil de récupération (50) pour déplacer le conteneur (130) entre la position de stockage et la cavité du dispositif robotique de récupération (10),
système **caractérisé en ce que**
l'unité d'étagères (100) comprend un identifiant unique (135) associé à chaque position de l'ensemble des positions de stockage,
le dispositif robotique de récupération (10) définit une cavité (15) dimensionnée pour recevoir le conteneur (130), et
le dispositif de récupération (10) comprend des roues de traction (30) adjacentes aux roues d'entraînement (20) qui peuvent être entraînées par le même mécanisme d'entraînement que les roues d'entraînement, les roues de traction (30) et les roues d'entraînement (20) partageant un axe commun.

2. Système robotique de stockage et de récupération selon la revendication 1, dans lequel la paire de rails verticaux (110, 112) et le mécanisme d'entraînement en traction comprennent un montage à crémaillère et pignons, le mécanisme d'entraînement en traction ayant une paire de roues de traction (30) sous la forme de pignons et la paire de rails verticaux (110, 112) est configurée sous la forme de pignons à crémaillère.

3. Système robotique de stockage et de récupération selon la revendication 1, comprenant en outre: un appareil d'accrochage (35) entre l'unité d'étagères (100) et le dispositif robotique de récupération (10) fonctionnant pour maintenir le dispositif récupérateur (10) engagé avec la paire de rails latéraux (110, 112) lorsque le dispositif récupérateur est propulsé verticalement le long des rails latéraux (110, 112).

4. Système robotique de stockage et de récupération selon la revendication 3, dans lequel l'appareil d'accrochage (35) comprend une paire de bras (36) qui se déploient du dispositif robotique de récupération (10), chaque bras (36) ayant un galet (37) pour coopérer avec l'un des rails latéraux (110, 112) correspondants de l'unité d'étagères (100).

5. Système robotique de stockage et de récupération selon la revendication 1, dans lequel
l'identifiant unique (135) est un identifiant parmi les suivants: code barre, étiquette RFID ou image unique, et l'unité de reconnaissance est une unité parmi les suivantes: lecteur de code à barres, lecteur d'étiquette RFID et caméra associée à un programme de reconnaissance d'images.

6. Système robotique de stockage et de récupération selon la revendication 1, dans lequel le mécanisme d'entraînement comprend un ensemble de roues de contact avec le sol, fonctionnant pour guider le dispositif robotique de récupération (10) entre l'unité d'étagères (100) et un emplacement libre, séparé.

7. Système robotique de stockage et de récupération selon la revendication 1, dans lequel le dispositif robotique de récupération (10) comprend une alimentation embarquée pour fournir la puissance au mécanisme d'entraînement, à l'unité de reconnaissance, au mécanisme d'entraînement en traction et à l'appareil récupérateur (50).

8. Système robotique de stockage et de récupération selon la revendication 1, dans lequel l'appareil récupérateur (50) comprend un mécanisme déployable (52) monté sur la paroi arrière (17) du dispositif robotique de récupération (10) dans la cavité (15) et un grappin (54) à l'extrémité déployable du mécanisme déployable (52), le grappin (54) étant configuré pour coopérer avec un conteneur (130).

9. Système robotique de stockage et de récupération selon la revendication 8, dans lequel le grappin (54) comprend un composant magnétique ou un composant à verrouillage configuré pour coopérer avec un organe récepteur correspondant, du conteneur (130).

10. Système robotique de stockage et de récupération selon la revendication 1, dans lequel l'unité d'étagères (100) comprend un ensemble de colonnes verticales parmi un ensemble d'emplacements de stockage organisés verticalement.

11. Système robotique de stockage et de récupération selon la revendication 1, dans lequel le processeur comprend un composant de communication sans fil et fonctionnant pour communiquer sans fil avec un dispositif éloigné.

12. Système robotique de stockage et de récupération selon la revendication 11, dans lequel le dispositif éloigné est un smartphone.

13. Procédé pour le stockage et la récupération robotisée d'un conteneur (130) par rapport à une unité d'étagères (100) ayant un ensemble de colonnes verticales pour un ensemble d'emplacements de stockage verticaux, consistant à:
identifier un emplacement de stockage souhaité,
diriger un dispositif robotique de récupération (10) sur une colonne verticale correspondante dans laquelle se trouve l'emplacement de stockage voulu, le dispositif de récupération (10) étant propulsé par un mécanisme d'entraînement comprenant des roues motrices (20),
faire coopérer le dispositif robotique de récupération (10) avec une paire de rails verticaux (110, 112) de la colonne verticale correspondante,
propulser le dispositif robotique de récupération (10) verticalement le long de la paire de rails verticaux (110, 112) jusqu'à ce que le dispositif robotique de récupération (10) se trouve à l'emplacement de stockage voulu, et
déplacer le conteneur (130) entre le dispositif robotique de récupération (10) et l'emplacement de stockage voulu avec un appareil récupérateur du dispositif robotique de récupération (10),
procédé **caractérisé en ce que**
l'unité d'étagères (100) comprend un identifiant unique (135) associé à chacun des emplacements de l'ensemble d'emplacements de stockage,
le conteneur est reçu dans une cavité (15) définie par le dispositif robotique de récupération (10), et
le dispositif robotique de récupération (10) comprend des unités de traction (30) adjacentes aux roues motrices (20) qui peuvent être entraînées par le même mécanisme d'entraînement que les roues motrices, les roues de traction (30) et les roues motrices (20) partageant un axe commun.

14. Procédé de stockage et de récupération robotisé d'un conteneur selon la revendication 13, procédé selon lequel le dispositif robotique de récupération (10) est organisé pour assurer la fonction de stockage et de récupération en utilisant un smartphone.
